# EUROPÄISCHE PATENTANMELDUNG

(11) **EP 3 712 730 A1**
(43) Veröffentlichungstag der Anmeldung: **23.09.2020**
(21) Anmeldenummer: 19163768.5
(22) Anmeldetag: 19.03.2019
(51) Int. Cl.: G05B 19/418

(54) **ORCHESTRIERUNG MODULARER TECHNISCHER ANLAGEN**

(71) Anmelder: Siemens Aktiengesellschaft, 80333 München (DE)
(72) Erfinder: Maurmaier, Mathias, 70839 Gerlingen (DE); Stutz, Andreas, 76344 Eggenstein-Leopoldshafen (DE)

(57) **Zusammenfassung**

Verfahren zur automatisierten Orchestrierung einer Mehrzahl an technischen Modulen einer verfahrenstechnischen Anlage, basierend auf statischen, typbasierten Beschreibungsinformationen der Module, ermittelten Services und Fahrweisen.
Services mit verfahrenstechnisch gleichartiger Funktionalität werden zu Superservices zusammengefasst und in einer Datenbank hinterlegt. Ausgehend von einem umzusetzenden Rezept werden die zum Ablauf passenden Superservices durch einen Orchestrierungs-Planungsdienst ermittelt und eine Topologie der verfahrenstechnischen Anlage bestimmt. Die so erstellte Orchestrierung der Mehrzahl an technischen Modulen wird bereitgestellt.

## Beschreibung

Die Erfindung betrifft ein Verfahren zur automatisierten Orchestrierung einer Mehrzahl an technischen Modulen einer verfahrenstechnischen Anlage nach Anspruch 1. Außerdem betrifft die Erfindung ein Verfahren zur Orchestrierung einer Mehrzahl an technischen Modulen einer technischen Anlage nach Anspruch 2. Zudem betrifft die Erfindung ein Orchestrierungssystem zum Orchestrieren einer verfahrenstechnischen Anlage nach Anspruch 11. Darüber hinaus betrifft die Erfindung Computersystem zur Orchestrierung einer modularen technischen Anlage nach Anspruch 12, ein Computerprogramm mit durch einen Computer ausführbaren Programmcodeanweisungen nach Anspruch 13 und ein computerlesbares Medium nach Anspruch 14.

Vor allem in der Pharmaindustrie und Spezialchemie bestehen hohe Anforderungen an Betreiber technischer Anlagen schnell auf geänderte Marktanforderungen reagieren zu können. Modulare Anlagen ermöglichen es den Anlagenbetreibern, die sogenannte "Time-to-Market" erheblich zu verkürzen und durch einen aufwandsarmen Umbau der Anlage schnell auf geänderte Marktbedingungen reagieren zu können. Die Anlagenbetreiber können sich hierzu einen Pool an modularen Einheiten (z.B. Prozesseinheiten) aufbauen, mithilfe dessen sie eine konkrete Anlage mittels der sogenannten Orchestrierung zusammenstellen können. Soll die Anlage umgebaut werden, so werden einzelne Module entnommen und durch andere, zum Beispiel leistungsfähigere Module ersetzt.

Der Pool enthält dabei eine Vielzahl an Modulen für bestimmte Verfahrensschritte. Bei einem Modul kann es sich beispielsweise um ein Reaktormodul handeln, welches Stoffe verrühren, temperieren und das Gemisch in ein anderes Modul dosieren kann). Auch für gleichartige Verfahrensschritte gibt es eine Vielzahl von Varianten: Ein Dosieren kann beispielsweise nach Volumenfluss, Massenfluss oder absoluter Menge erfolgen. Diese Varianten werden typischerweise als Fahrweisen eines sogenannten Service implementiert. Nicht jedes Modul für einen bestimmten Verfahrensschritt unterstützt dabei alle Varianten. Unter einer "Fahrweise" wird vorliegend demnach eine Ausprägung einer verfahrenstechnischen Operation verstanden.

Unter dem Begriff "Service" wird im Folgenden eine automatisierungstechnische Darstellung von konkreten physikalischen Ausgestaltungen von technischen Operationen des technischen Moduls verstanden.

Bei bislang bekannten Automatisierungssystemen wie "PCS 7" oder dem "TIA Portal" der Firma Siemens wird die Orchestrierung von Modulen auf klassische Konzepte der Automatisierungstechnik abgebildet. Dabei werden Kommunikationsverbindungen projektiert, Bedienbilder entwickelt und übergeordnete
Ablaufsequenzen mit Sprachen wie "S7-Graph" oder "SFC (Sequential Flow Chart)" erstellt. Dies ist aufwändig und
aufgrund mangelnder einschlägiger Kenntnisse von Verfahrenstechnikern nur schwer durchführbar.

In der Druckschrift WO 2016/074730 A1 wird eine Methode beschrieben, wie eine modulare technische Anlage mittels Selbstbeschreibungsinformationen der Module erstellt werden kann. Diese Methode basiert auf online verfügbaren Selbstbeschreibungsinformationen der einzelnen Module. Bei einem Orchestrierungsprozess einer modularen Anlage liegen diese

Information jedoch im Regelfall nicht (online) vor, da die Planung offline auf Basis statischer Typbeschreibungsinformationen wie zum Beispiel dem Module Type Package (MTP) erfolgt (vgl. vom Verein Deutscher Ingenieure (VDI) veröffentlichter Entwurf der Norm "VDI/VDE/NAMUR 2658" vom 4. Januar 2018).

In der EP 2 866 105 A1 ist eine Basistechnologie beschrieben, welche zur Realisierung von sogenannten Service-Kapseln verwandt werden kann.

Der Erfindung liegt die Aufgabe zugrunde, ein effizienteres, vereinfachtes Verfahren zur Orchestrierung einer technischen Anlage anzugeben.

Diese Aufgabe wird gelöst durch ein Verfahren zur automatisierten Orchestrierung einer Mehrzahl an technischen Modulen einer verfahrenstechnischen Anlage nach Anspruch 1.

Das Verfahren nach Anspruch 1 umfasst die folgenden Verfahrensschritte:
a) Ermitteln von statischen, typbasierten Beschreibungsinformationen der technischen Module mittels eines computerimplementierten Modultyp-Verwaltungsdienstes;
b) Ermitteln von Services mittels der statischen, typbasierten Beschreibungsinformationen;
c) Ermitteln von Fahrweisen aller zuvor ermittelten Services mittels der statischen, typbasierten Beschreibungsinformationen;
d) Jeweiliges Zusammenfassen von Services mit verfahrenstechnisch gleichartiger Funktionalität und deren dazugehörigen Fahrweisen zu Superservices;
e) Hinterlegen der ermittelten Superservices in einer Datenbank der verfahrenstechnischen Anlage;
f) Ausgehend von einem auf der verfahrenstechnischen Anlage umzusetzenden verfahrenstechnischen Rezept, Ermittlung von zu einem Ablauf des verfahrenstechnischen Rezepts passenden, in der Datenbank hinterlegten Superservices durch einen Orchestrierungs-Planungsdienst;
g) Ausgehend von den zuvor ermittelten Superservices Bestimmung einer Topologie der verfahrenstechnischen Anlage in Bezug auf die technischen Module;
h) Bereitstellung einer gemäß den Verfahrensschritten a bis f erstellten Orchestrierung der Mehrzahl an technischen Modulen der verfahrenstechnischen Anlage.

Unter einem "technischen Modul" wird eine abgeschlossene technische Einheit verstanden, die in eine übergeordnete Steuerungsebene der verfahrenstechnischen Anlage integrierbar ist. Ein solches technisches Modul kann zum Beispiel ein Zusammenschluss mehrerer Messstellen oder ein größerer Anlagenteil der verfahrenstechnischen Anlage sein. Ein technisches Modul kann eine beliebige Kombination aus Einzelsteuerelementen, Sensoren oder Automatisierungskomponenten umfassen. Zudem können auch softwaretechnische Abbildungen von beispielsweise Einzelsteuerelementen Teil eines technischen Moduls sein.

Zunächst werden statische, d.h. in dem jeweiligen technischen Modul bereits enthaltene Informationen mittels des computerimplementierten Modultyp-Verwaltungsdienstes aus den zu orchestrierenden technischen Modulen ausgelesen. Die Informationen beinhalten einen Typ des technischen Moduls beziehungsweise der in dem technischen Modul enthaltenen Komponenten. Daher werden die Informationen als typbasiert bezeichnet. Die statischen, typbasierten Beschreibungsinformationen können beispielsweise als Module Type Package (MTP) vorliegen (vgl. vom Verein Deutscher Ingenieure (VDI) veröffentlichter Entwurf der Norm "VDI/VDE/NAMUR 2658" vom 4. Januar 2018).

Unter dem Begriff "Service" wird eine automatisierungstechnische Darstellung von konkreten physikalischen Ausgestaltungen verfahrenstechnischer Operationen des jeweiligen technischen Moduls verstanden. Beispielweise kann ein technisches Modul einen Service "Entleeren", "Temperieren", "Rühren" oder "Befüllen" aufweisen.

Der computerimplementierte Modultyp-Verwaltungsdienst ermittelt nicht nur die in einem technischen Modul enthaltenen Services, sondern auch die dazugehörigen Fahrweisen. Ein Service "Befüllen" kann beispielsweise unter der Fahrweise "selbstbeendend" gefahren werden, d.h. der Service "Befüllen" beendet sich nach der Abarbeitung eines bestimmten Füllvorgangs selbst. Alternativ kann der Service "Befüllen" unter einer Fahrweise gefahren werden, die eine kontinuierliche Füllung verarbeitet. Unter einer "Fahrweise" wird vorliegend demnach eine Ausprägung einer verfahrenstechnischen Operation verstanden. In der Regel weist ein Service eine Vielzahl an verschiedenen (verfahrenstechnischen) Fahrweisen auf. Dabei können die Services je nach der angefahrenen Fahrweise unterschiedliche Komponenten des technischen Moduls nutzen.

Erfindungsgemäß werden die Services mit verfahrenstechnisch gleichartiger Funktionalität und die dazugehörigen Fahrweisen zu sogenannten Superservices zusammengefasst. Unter einer verfahrenstechnisch gleichartigen Funktionalität wird ein klammernder Klassifizierungsmaßstab für die einzelnen Service verstanden. Beispielsweise können die Services nach der Zugehörigkeit zu einer bestimmten verfahrenstechnischen Grundoperation mit den zugehörigen Superservices zusammengefasst werden (vgl. "Verfahrenstechnik Grundoperationen", TGL 25000, Blatt 1, März 1974, Deutsche Demokratische Republik). Die Superservices stehen dann zur weiteren Verarbeitung zur Verfügung und werden in einer dem technischen Modul übergeordneten Datenbank der verfahrenstechnischen Anlage hinterlegt.

Der Orchestrierungs-Planungsdienst geht darauffolgend von einem bestimmten auf der verfahrenstechnischen Anlage umzusetzenden verfahrenstechnischen Rezept aus und ermittelt automatisiert aus der Datenbank zu dem Rezept passende Superservices. Unter einem "Rezept" wird dabei eine Ablaufbeschreibung von einzelnen Verfahrensschritten als Orchestrierungsbeschreibung verstanden.

Nach der Identifizierung der passenden Superservices bestimmt der Orchestrierungs-Planungsdienst automatisiert eine Topologie der verfahrenstechnischen Anlage. Mit anderen Worten vergleicht der Orchestrierungs-Planungsdienst automatisiert, welche technischen Module zu den ermittelten Superservices gehören und ordnet diese technischen Module in einer an das umzusetzende verfahrenstechnische Rezept orientierten Art und Weise in der verfahrenstechnischen Anlage an. Zur Topologie können neben der räumlichen Anordnung der technischen Module auch passende Verbindungen zwischen den technischen Modulen gehören.

Das erfindungsgemäße Verfahren liefert als Ergebnis eine vollständige Orchestrierung der in die Bearbeitung einbezogenen technischen Module. Diese Orchestrierung ist in besonders vorteilhafter Weise auf das spezielle umzusetzende verfahrenstechnische Rezept abgestimmt und kann einem Planer der verfahrenstechnischen Anlage bzw. einem Projekteur eine effiziente Orchestrierung der einzelnen technischen Module liefern. Die fertige Orchestrierung umfasst dabei eine Konfiguration eines Laufzeitsystems der verfahrenstechnischen Anlage und gibt unter anderem vor, auf welche Art und Weise die einzelnen technischen Module untereinander funktionell und signaltechnisch verschaltet sind.

Die Aufgabe wird zudem gelöst durch ein Verfahren zur Orchestrierung einer Mehrzahl an technischen Modulen einer technischen Anlage nach Anspruch 2. Dieses Verfahren umfasst die folgenden Schritte:
a) Automatisiertes Ermitteln von statischen, typbasierten Beschreibungsinformationen der technischen Module mittels eines computerimplementierten Modultyp-Verwaltungsdienstes, wobei die Beschreibungsinformationen wenigstens einen Modultyp umfassen;
b) Zugreifen auf in der verfahrenstechnischen Anlage hinterlegte, zu den ermittelten Modultypen korrespondierende Rollen, wobei eine Rolle eine Menge an gemäß einer bestimmten Vorschrift zusammengehörigen verfahrenstechnischen Funktionen darstellt;
c) Verknüpfen von einzelnen Rollen im Kontext einer bestehenden Topologie der verfahrenstechnischen Anlage;
d) Ermittlung von zu den verknüpften Rollen passenden Instanzen der einzelnen technischen Module der verfahrenstechnischen Anlage mittels eines Orchestrierungs-Planungsdienstes;
e) Bereitstellung einer gemäß den Verfahrensschritten a bis d erstellten Orchestrierung der Mehrzahl an technischen Modulen.

Nach dem automatisierten Ermitteln der statischen, typbasierten Beschreibungsinformationen der technischen Module wird auf bereits in der verfahrenstechnischen Anlage hinterlegte Rollen zugegriffen. Diese Rollen stellen eine Menge an gemäß einer bestimmten Vorschrift zusammengehörigen verfahrenstechnischen Funktionen dar. Für eine detailliertere Erläuterung des Begriffes sei auf die Beschreibung des Ausführungsbeispiels verwiesen.

Im Gegensatz zum zuvor erläuterten Verfahren geht der Orchestrierungs-Planungsdienst von vorhandenen Rollen der einzelnen Modultypen aus und verknüpft diese mit den aktuell verfügbaren Instanzen der einzelnen technischen Module im Kontext der Topologie der verfahrenstechnischen Anlage. Der Orchestrierungs-Planungsdienst prüft dabei, welche Instanz eines technischen Moduls (in dem Leitsystem der verfahrenstechnischen Anlage) gerade verfügbar ist und fügt das betreffende technische Modul in die bereitgestellte Orchestrierung ein. Es wird also ein umgekehrter Weg wie im zuerst erläuterten Verfahren beschrieben.

Besonders bevorzugt werden, ausgehend von einem auf der verfahrenstechnischen Anlage umzusetzenden verfahrenstechnischen Rezept, zu einem Ablauf des verfahrenstechnischen Rezepts passende, zuvor gemäß dem oben erläuterten Verfahren ermittelte Superservices von dem Orchestrierungs-Planungsdienst ermittelt. Daran anschließend wird eine bereits bestehende (Grund-)Orchestrierung der Mehrzahl an technischen Modulen im Kontext der Topologie der verfahrenstechnischen Anlage angepasst. Dabei wird geprüft, ob die in der Topologie verwendeten Rollen die zuvor identifizierten Superservices aufweisen. Die zu den Rollen passenden Instanzen der einzelnen technischen Module werden dann für die Abarbeitung des Rezepts verwendet.

Als Weiterbildung der zuvor erläuterten Verfahren werden dabei die ermittelten Superservices dazu verwendet, eine bereits bestehende Topologie einer verfahrenstechnischen Anlage weiter zu verbessern.

Besonders bevorzugt werden, ausgehend von den in der Topologie der verfahrenstechnischen Anlage verwendeten Rollen, die für ein verfahrenstechnisches Rezept verfügbaren Superservices ermittelt, wobei die Superservices zuvor gemäß dem oben erläuterten Verfahren ermittelt worden sind.

Dabei kann der computerimplementierte Modultyp-Verwaltungs-dienst im Rahmen der Ermittlung der statischen, typbasierten Beschreibungsinformationen der technischen Module jedem technischen Modul einen Indikator zuweisen. Dieser Indikator kann beispielsweise auf einer Anzahl in dem jeweiligen technischen Modul enthaltenen Modultypen und/oder Services oder auf deren Leistungskennzahlen wie eine Durchflussmenge, eine Bearbeitungsdauer oder dergleichen beruhen. Durch die Verwendung eines solchen Indikators lassen sich einzelne technischen Module bewerten, um bestimmte, automatisiert ablaufende Optimierungsverfahren anwenden zu können.

Bevorzugt wird der Indikator von dem Orchestrierungs-Planungsdienst bei der Orchestrierung der technischen Module zusätzlich zu den Superservices und/oder den Modultypen und/oder Rollen berücksichtigt.

Im Rahmen einer vorteilhaften Weiterbildung der Erfindung wird von dem Orchestrierungs-Planungsdienst bei der Orchestrierung der technischen Module zusätzlich ein regelungstechnischer Kontext berücksichtigt. Dies bedeutet, dass einem Planer bzw. Projekteur der verfahrenstechnischen Anlage ein Vorschlag für eine Orchestrierung der einzelnen technischen Module unterbreitet wird, der die speziellen Anforderungen an Regelkreise oder dergleichen berücksichtigt.

Alternativ oder zusätzlich kann von dem Orchestrierungs-Planungsdienst bei der Orchestrierung der technischen Module ein operatororientierter Kontext berücksichtigt werden. Dies bedeutet, dass der Orchestrierungs-Planungsdienst bei der Erstellung der Orchestrierung eine verbesserte Bedienbarkeit für einen Operator der verfahrenstechnischen Anlage als Randbedingung aufnimmt. Die Aufgabe wird zudem gelöst durch ein Orchestrierungssystem zum Orchestrieren einer verfahrenstechnischen Anlage mit einer Mehrzahl an technischen Modulen, das dazu ausgebildet und vorgesehen ist, ein Verfahren wie zuvor erläutert durchzuführen.

Die Aufgabe wird zudem gelöst durch ein Computersystem zur Orchestrierung einer modularen verfahrenstechnischen Anlage, umfassend ein solches Orchestrierungssystem.

Die Aufgabe wird zudem gelöst durch ein Computerprogramm mit durch einen Computer ausführbaren Programmcodeanweisungen zur Implementierung des zuvor beschriebenen Verfahrens nach Anspruch 13 und durch ein computerlesbares Medium, umfassend Befehle, die bei der Ausführung durch einen Computer diesen veranlassen, das zuvor beschriebene Verfahren auszuführen, nach Anspruch 14.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung des Ausführungsbeispiels, das im Zusammenhang mit der Zeichnung näher erläutert wird.

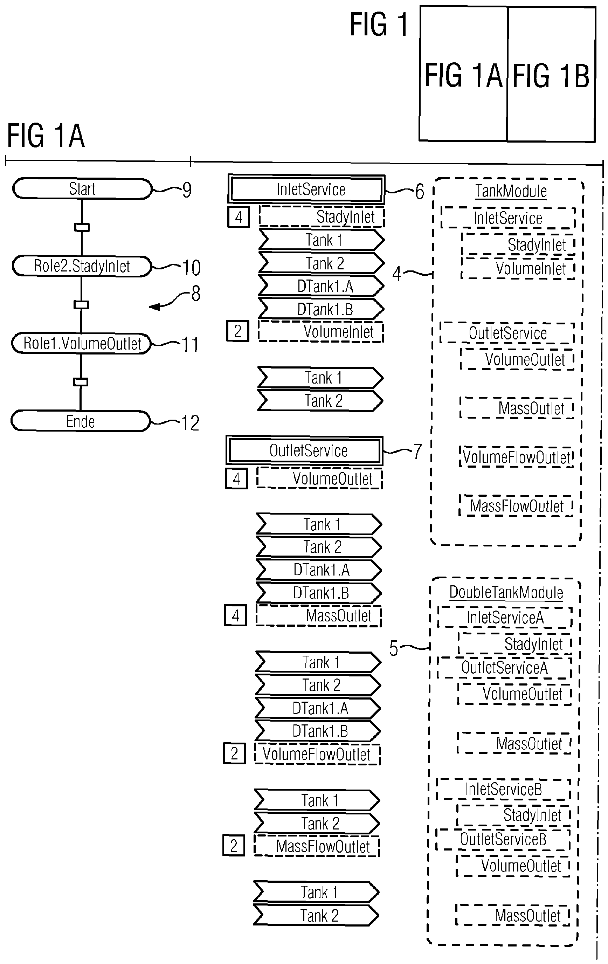

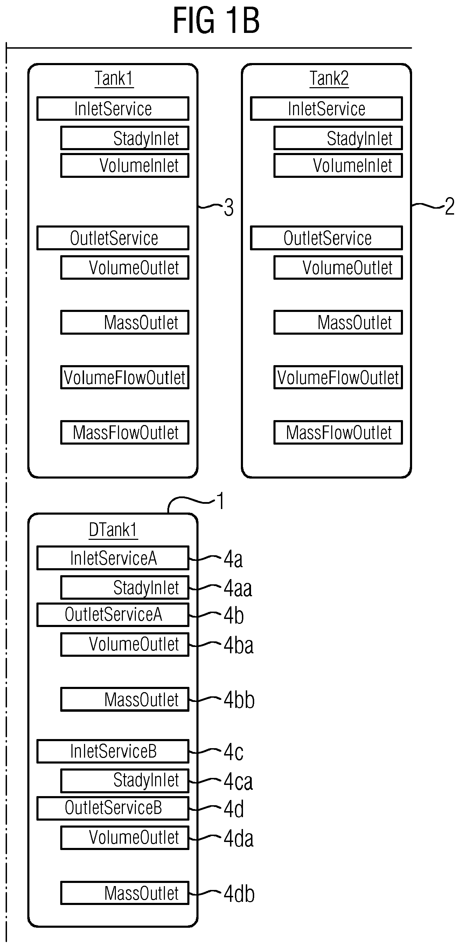

In Fig. 1 ist ein erstes technisches Modul 1, ein zweites technisches Modul 2 und ein drittes technisches Modul 3 schematisch dargestellt. Das erste technische Modul 1 ist als "DTank1" bezeichnet und weist vier technische Services 4a, 4b, 4c, 4d auf (mit "InletServiceA", "OutletServiceA", "InletServiceB" und "OutletServiceB" bezeichnet). Der Service 4a "InletServiceA" weist eine Fahrweise "StadyInlet" 4aa auf. Der Service 4b "OutletServiceA" weist zwei Fahrweisen "VolumeInlet" 4ba und "MassOutlet" 4bb auf. Der Service 4c "InletServiceB" weist eine Fahrweise "StadyInlet" 4ca auf. Der Service 4d "OutletServiceB" weist zwei Fahrweisen "VolumeInlet" 4da und "MassOutlet" 4db auf.

Entsprechend weisen das zweite technische Modul 2 und das dritte technische Modul 3 Services mit dazugehörigen Fahrweisen auf, wobei aus Übersichtlichkeitsgründen auf deren Bezeichnung verzichtet wird.

In der Fig. 1 links von den technischen Modulen 1, 2, 3 sind (mit gestrichelter Umrahmung) zwei Modultypen 4, 5 dargestellt. Der erster Modultyp 4 wird als "TankModule" bezeichnet und findet seine Instanziierung in den beiden realen Modulen 2 und 3. Der zweite Modultyp 5 wird als "DoubleTankModule" bezeichnet und findet seine Instanziierung in dem realen Modul 1. Beide Modultypen 4, 5 umfassen jeweils die Services und Fahrweisen der dazugehörigen technischen Module 1, 2, 3.

Weiter links in Fig. 1 ist ein erster Superservice 6 und ein zweiter Superservice 7 dargestellt. Dabei wurden für den ersten Superservice 6 die drei Services "InletService", "InletServiceA" und "InletServiceB", die von beiden Modultypen 4, 5 umfasst sind, samt deren dazugehörige Fahrweisen zusammengefasst. Bedingung für diese Zusammenfassung war, dass es sich bei allen drei Services um "Inlet"-Services handelt, die daher eine verfahrenstechnisch gleichartige Funktionalität aufweisen. Mit der Zahl "4" links neben der Fahrweise "StadyInlet" wird die Anzahl der möglichen Instanziierungen für den Superservice "InletService" in der Fahrweise "StadyInlet" angegeben (jeweils einmal in "Tank1" und "Tank2" sowie zweimal in "DTank1"). Dies bedeutet, dass der Superservice "InletService" 6 entweder auf einem der beiden Module 2, 3 oder auf einem der beiden Tanks des ersten Moduls 1 realisiert werden kann.

Auf der linken Seite in Fig. 1 ist der Ablauf 8 eines verfahrenstechnischen Rezepts dargestellt. Nach dem Start 9 wird im zweiten Schritt 10 eine Fahrweise "StadyInlet" benötigt. Hierzu ermittelt der Orchestrierungs-Planungsdienst automatisch den Superservice "InletService" 6 als passenden Superservice, da er die benötigte Funktion aufweist. Ausgehend von dem ermittelten Superservice 6 werden die vier zuvor genannten Instanziierungen als mögliche reale technische Implementierung des verfahrenstechnischen Schritts 10 identifiziert und gemäß einem bestimmten Auswahlkriterium festgelegt. Die Auswahl kann dabei auf bestimmten Indikatoren wie einer Leistungskennzahl des jeweiligen zu instanziierenden technischen Moduls 1, 2, 3 beruhen. Aus den ermittelten Verknüpfungen der technischen Module 1, 2, 3 wird die gesamte Orchestrierung für die technischen Module 1, 2, 3 zum Betrieb einer verfahrenstechnischen Anlage bereitgestellt, auf der das Rezept ablaufen soll.

In einem dritten Schritt 11 des Rezepts wird eine Fahrweise "VolumeOutlet" benötigt. Diese ist Teil des zweiten Superservices "OutletService" 7, der wiederum vier Instanziierungen (dieselben wie zuvor beschrieben) aufweist. Mit dem "Ende" 12 ist der Ablauf des verfahrenstechnischen Rezepts gekennzeichnet.

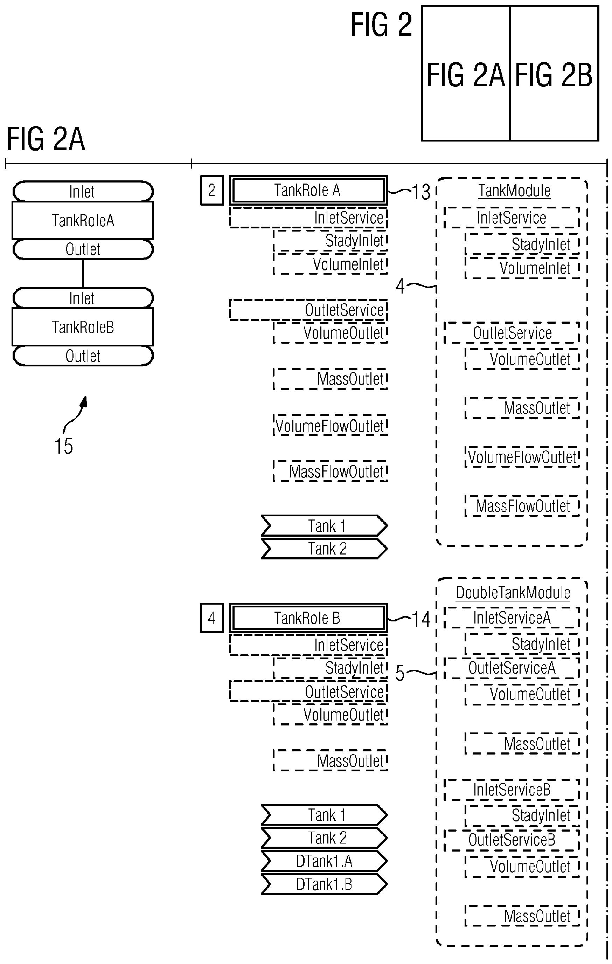

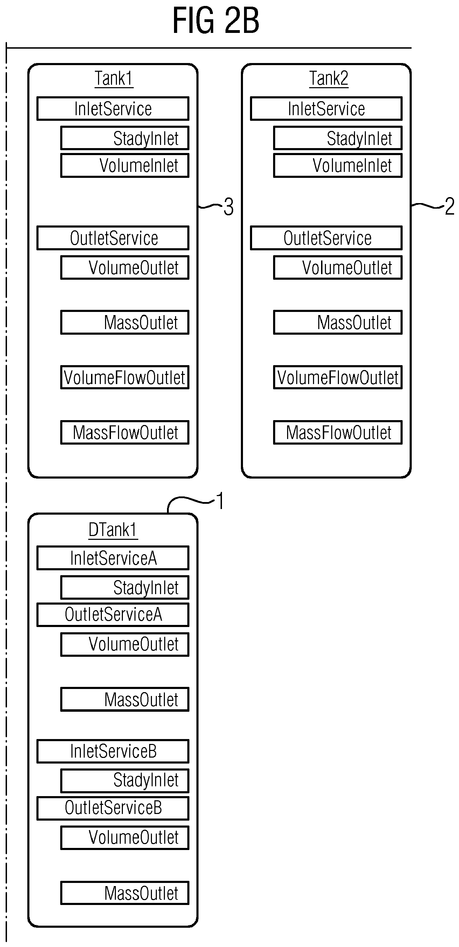

In Fig. 2 sind auf der rechten Halbseite die identischen technischen Module 1, 2, 3 und Modultypen 4, 5 wie in Fig. 1 dargestellt. Um unnötige Wiederholungen zu vermeiden, sei auf die zur Fig. 1 gehörige Beschreibung verwiesen.

In einer Datenbank einer verfahrenstechnischen Anlage sind eine erste Rolle 13 und eine zweite Rolle 14 hinterlegt. Die erste Rolle 13 ist mit "TankRole A" bezeichnet, die zweite Rolle 14 mit "TankRole B".

Die erste Rolle 13 umfasst einen Service "InletService" und einen Service "OutletService" sowie sechs dazugehörige Fahrweisen ("StadyInlet", "VolumeInlet" etc.). Die zweite Rolle 14 umfasst ebenfalls einen Service "InletService" und einen Service "OutletService". Im Gegensatz zur ersten Rolle 13 umfasst die zweite Rolle 14 jedoch nur drei dazugehörige Fahrweisen. Die verfügbaren Rollen 13, 14 wurden im Vorfeld von einer bestehenden Topologie der verfahrenstechnischen Anlage abgeleitet und in der Datenbank hinterlegt. Mit anderen Worten wurde bei einer bestehenden Topologie geprüft, welche (vordefinierten) Rollen von der Topologie erfüllt werden können.

Auf der linken Seite in Fig. 2 ist der Ablauf eines verfahrenstechnischen Rezepts 15 dargestellt. Zunächst wird die erste Rolle 13 "TankRole A" benötigt. Diese kann durch zwei Instanziierungen ("Tank1" und "Tank2") realisiert werden, was auch die Ziffer links der Rollenbezeichnung verdeutlicht. Die Information bezüglich der verfügbaren Instanziierungen ist in Fig. 2 auch unterhalb der jeweiligen Fahrweisen dargestellt. In einem zweiten Schritt wird die zweite Rolle 14 "TankRole B" benötigt, die wiederum von vier Instanziierungen ("Tank1", "Tank2" sowie zweimal der Doppeltank "DTank1") realisiert werden kann.

Ausgangspunkt ist demnach eine bereits bestehende Topologie einer verfahrenstechnischen Anlage sowie bereitgestellte (Modul-)Rollen. Eine Rolle ist dabei ein virtuelles Planungsartefakt und charakterisiert sich dadurch, dass sie einen physikalischen Zusammenhang verschiedener Services definiert.

Mit Hilfe einer Rolle besitzt der Orchestrierungs-Planungs-dienst die Möglichkeit zu ermitteln, wie häufig diese Rolle durch eine konkrete Instanz realisiert werden kann und welche Variationen an verschiedenen Fahrweisen angeboten werden.

Auf Basis dieser Informationen der hier beschriebenen Mechanismen können einem Bediener der verfahrenstechnischen Anlage automatisiert Kombinationsmöglichkeiten aufgezeigt werden, welche konkreten technischen Module ihm die größtmögliche Flexibilität bieten, die mit dem derzeit verfügbaren Modulpool realisierbar ist. Ein nach einem bestimmen Indikator ausgewählte Kombinationsmöglichkeit wird automatisch in das Orchestrierungssystem überführt, da aufgrund der konkreten Modulinstanzen auch die konkrete funktionale Vielfalt bekannt ist.

Diese automatisierten Prozesse bringen den Vorteil einer automatischen Konfiguration des Orchestrierungssystems mit Fokus auf funktionale Vielfalt mit sich, ohne die verfahrenstechnische Anlage umbauen zu müssen.

Obwohl die Erfindung im Detail durch die bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zur automatisierten Orchestrierung einer Mehrzahl an technischen Modulen (1, 2, 3) einer verfahrenstechnischen Anlage, umfassend:
a) Ermitteln von statischen, typbasierten Beschreibungsinformationen der technischen Module (1, 2, 3) mittels eines computerimplementierten Modultyp-Verwaltungsdienstes;
b) Ermitteln von Services (4a, 4b, 4c, 4d) mittels der statischen, typbasierten Beschreibungsinformationen;
c) Ermitteln von Fahrweisen (4aa, 4ba, 4bb, 4ca, 4da, 4db) aller zuvor ermittelten Services (4a, 4b, 4c, 4d) mittels der statischen, typbasierten Beschreibungsinformationen;
d) Jeweiliges Zusammenfassen von Services (4a, 4b, 4c, 4d) mit verfahrenstechnisch gleichartiger Funktionalität und deren dazugehörigen Fahrweisen zu Superservices (4, 5) ;
e) Hinterlegen der ermittelten Superservices (4, 5) in einer Datenbank der verfahrenstechnischen Anlage;
f) Ausgehend von einem auf der verfahrenstechnischen Anlage umzusetzenden verfahrenstechnischen Rezept (8, 15), Ermittlung von zu einem Ablauf des verfahrenstechnischen Rezepts (8, 15) passenden, in der Datenbank hinterlegten Superservices (4, 5) durch einen Orchestrierungs-Planungsdienst;
g) Ausgehend von den zuvor ermittelten Superservices (4, 5) Bestimmung einer Topologie der verfahrenstechnischen Anlage in Bezug auf die technischen Module (1, 2, 3) ;
h) Bereitstellung einer gemäß den Verfahrensschritten a bis f erstellten Orchestrierung der Mehrzahl an technischen Modulen (1, 2, 3) der verfahrenstechnischen Anlage.

2. Verfahren zur Orchestrierung einer Mehrzahl an technischen Modulen (1, 2, 3) einer technischen Anlage, umfassend:
a) Automatisiertes Ermitteln von statischen, typbasierten Beschreibungsinformationen der technischen Module (1, 2, 3) mittels eines computerimplementierten Modultyp-Verwaltungs-dienstes, wobei die Beschreibungsinformationen wenigstens einen Modultyp (4, 5) umfassen;
b) Zugreifen auf in einer Datenbank der verfahrenstechnischen Anlage hinterlegte, zu den ermittelten Modultypen (4, 5) korrespondierende Rollen (13, 14), wobei eine Rolle eine Menge an gemäß einer bestimmten Vorschrift zusammengehörigen verfahrenstechnischen Funktionen darstellt;
c) Verknüpfen von einzelnen Rollen (13, 14) im Kontext einer bestehenden Topologie der verfahrenstechnischen Anlage;
d) Ermittlung von zu den verknüpften Rollen (13, 14) passenden Instanzen der einzelnen technischen Module (1, 2, 3) der verfahrenstechnischen Anlage mittels eines Orchestrierungs-Planungsdienstes;
e) Bereitstellung einer gemäß den Verfahrensschritten a bis d erstellten Orchestrierung der Mehrzahl an technischen Modulen (1, 2, 3).

3. Verfahren nach Anspruch 1, bei dem:
i) ausgehend von einem auf der verfahrenstechnischen Anlage umzusetzenden verfahrenstechnischen Rezept (8, 15) zu einem Ablauf des verfahrenstechnischen Rezepts (8, 15) passende, zuvor gemäß den Verfahrensschritten a bis e von Anspruch 1 ermittelte Superservices (6, 7) von dem Orchestrierungs-Planungsdienst aus der Datenbank abgerufen werden,
ii) eine bereits bestehende Grundorchestrierung einer Mehrzahl an technischen Modulen (1, 2, 3) im Kontext der Topologie der verfahrenstechnischen Anlage angepasst wird, indem geprüft wird, ob die in der Topologie verwendeten Rollen (13, 14) die zuvor identifizierten Superservices (4, 5) aufweisen,
iii) die zu den zuvor ermittelten Rollen (13, 14) gehörigen Instanzen der technischen Module (1, 2, 3) für den Ablauf des verfahrenstechnischen Rezepts (8, 15) verwendet werden.

4. Verfahren nach Anspruch 1 und 2, bei dem ausgehend von den in der Topologie der verfahrenstechnischen Anlage verwendeten Rollen (13, 14) gemäß Anspruch 2 die für ein verfahrenstechnisches Rezept (8, 15) verfügbaren Superservices (4, 5) ermittelt werden, wobei die Superservices (4, 5) zuvor gemäß den Verfahrensschritten a bis e von Anspruch 1 ermittelt worden sind.

5. Verfahren nach einem der vorangegangenen Ansprüche, bei dem der computerimplementierte Modultyp-Verwaltungsdienst im Rahmen der Ermittlung der statischen, typbasierten Beschreibungsinformationen der technischen Module (1, 2, 3) jedem technischen Modul (1, 2, 3) einen Indikator zuweist.

6. Verfahren nach Anspruch 5, bei dem der Indikator auf einer Anzahl in dem jeweiligen technischen Modul (1, 2, 3) enthaltenen Modultypen (4, 5) und/oder Services (4a, 4b, 4c, 4d) beruht.

7. Verfahren nach Anspruch 5 oder 6, bei dem der Indikator auf Leistungskennzahlen der in dem jeweiligen technischen Modul (1, 2, 3) enthaltenen Modultypen (4, 5) und/oder Services (4a, 4b, 4c, 4d) beruht.

8. Verfahren nach einem der Ansprüche 5 bis 7, bei dem von dem Orchestrierungs-Planungsdienst bei der Orchestrierung der technischen Module (1, 2, 3) zusätzlich zu den Superservices (4, 5) und/oder den Rollen (13, 14) der Indikator berücksichtigt wird.

9. Verfahren nach einem der vorangegangenen Ansprüche, bei dem von dem Orchestrierungs-Planungsdienst bei der Orchestrierung der technischen Module (1, 2, 3) zusätzlich ein regelungstechnischer Kontext berücksichtigt wird.

10. Verfahren nach einem der vorangegangenen Ansprüche, bei dem von dem Orchestrierungs-Planungsdienst bei der Orchestrierung der technischen Module (1, 2, 3) zusätzlich ein operatororientierter Kontext berücksichtigt wird.

11. Orchestrierungssystem zum Orchestrieren einer verfahrenstechnischen Anlage mit einer Mehrzahl an technischen Modulen (1, 2, 3), das dazu ausgebildet und vorgesehen ist, ein Verfahren gemäß einem der vorangegangenen Ansprüche durchzuführen.

12. Computersystem zur Orchestrierung einer modularen verfahrenstechnischen Anlage, umfassend ein Orchestrierungssystem gemäß Anspruch 11.

13. Computerprogramm mit durch einen Computer ausführbaren Programmcodeanweisungen zur Implementierung des Verfahrens nach einem der Ansprüche 1 bis 10.

14. Computerlesbares Medium, umfassend Befehle, die bei der Ausführung durch einen Computer diesen veranlassen, das Verfahren nach einem der Ansprüche 1 bis 10 auszuführen.
